(19) Europäisches Patentamt / European Patent Office / Office européen des brevets

(11) **EP 2 829 149 B1**

(12) **FASCICULE DE BREVET EUROPEEN**

(45) Date de publication et mention de la délivrance du brevet:
**25.05.2016 Bulletin 2016/21**

(21) Numéro de dépôt: **13715329.2**

(22) Date de dépôt: **15.03.2013**

(51) Int Cl.:
*H04W 84/20* (2009.01)    *H04B 7/26* (2006.01)

(86) Numéro de dépôt international:
**PCT/FR2013/050546**

(87) Numéro de publication internationale:
**WO 2013/140070 (26.09.2013 Gazette 2013/39)**

(54) **PROCÉDÉ, TERMINAL ET CASQUE DE COMMUNICATION VOCALE FULL-DUPLEX SANS FIL AVEC AUTO-SYNCHRONISATION SANS MAÎTRE NI BASE**

VERFAHREN, ENDVORRICHTUNG UND KOPFHÖRER ZUR DRAHTLOSEN VOLLDUPLEX-SPRACHKOMMUNIKATION MIT SELBSTSYNCHRONISATION OHNE MASTER BZW. BASIS

METHOD, TERMINAL AND HEADSET FOR FULL DUPLEX WIRELESS VOICE COMMUNICATION WITH SELF-SYNCHRONISATION WITHOUT A MASTER OR BASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2012 FR 1252574**

(43) Date de publication de la demande:
**28.01.2015 Bulletin 2015/05**

(73) Titulaire: **Bodysens**
**30035 Nimes Cedex 1 (FR)**

(72) Inventeurs:
• **BAYART, Laurent**
**F-30035 Nimes Cedex 1 (FR)**
• **CHAIX, Julien**
**F-30035 Nimes (FR)**
• **COULON, Denis**
**F-30035 Nimes (FR)**
• **MARIN, Michael**
**F-30035 Nimes Cedex 1 (FR)**

(74) Mandataire: **Cornuejols, Georges et al**
**Cassiopi**
**230 Avenue de l'Aube Rouge**
**34170 Castelnau-le-Lez (FR)**

(56) Documents cités:
| | |
|---|---|
| EP-A1- 1 843 326 | EP-A2- 1 143 416 |
| EP-A2- 1 333 618 | EP-A2- 2 244 526 |
| FR-A1- 2 947 124 | GB-A- 2 362 292 |

**Description**

**Domaine technique**

La présente invention concerne un procédé, un terminal et un casque de communication vocale sans fil avec auto-synchronisation sans maître ni base. Elle s'applique, en particulier, à la constitution d'un système autonome de communication vocale ou de données par radio, multi-utilisateurs, en mode « conférence » ou « full-duplex » par multiplexage temporel sur un canal radio unique. Ce système fonctionne entre au moins deux terminaux et ne nécessite la présence ni d'une base ni d'un terminal « maître » assurant la synchronisation, ni d'une infrastructure réseau existante, et permet la création d'un réseau de communication autonome garantissant la continuité de communication entre les différents terminaux, sans nécessiter la moindre configuration de l'un d'entre eux et sans qu'aucun d'entre eux n'ait un rôle indispensable pour maintenir la communication.

**Etat de la technique antérieure**

On connaît les systèmes de type « walkie-talkie » permettant de créer un réseau autonome de terminaux portables émetteurs-récepteurs pour la conversation ou la communication de signaux par radio. Sauf l'exception de systèmes utilisant plusieurs canaux simultanément, ces produits ne permettent pas de mode «conférence» à plus de deux terminaux.

D'autres types de réseaux de transmission de la parole utilisent les technologies Bluetooth (marque déposée), DECT (Digital Enhanced Cordless Telephone abrégé en DECT, en français téléphone sans-fil numérique amélioré), WiFi (ensemble de protocoles de communication sans fil régis par les normes du groupe IEEE 802.11, ISO/CEI 8802-11) (marque déposée), ou autres protocoles et bandes radio, pour permettre une conversation en mode « conférence » à au moins trois personnes grâce à des technologies de mixage ou de concentration et redistribution, ou par multiplexage temporel et simple synchronisation des données par un terminal dédié agissant en mode «Maître», les autres agissant en mode «Esclave».

Dans tous les cas de systèmes autorisant le mode « conférence » à plus de deux terminaux, les procédés utilisés sont confrontés à la nécessité de définir un terminal comme « Base » ou « Maître » qui mélange et/ou synchronise les flux de données des autres terminaux, ou utilisent plusieurs canaux radio simultanément. Certains de ces systèmes (document EP 2 947 124 du 24 décembre 2010), s'ils permettent une communication audio en temps partagé par multiplexage temporel sur un même canal radio et donc une conversation en mode «conférence», présentent l'inconvénient de ne pas pouvoir se passer du terminal Maître sans compromettre la communication entre les autres terminaux. Ainsi, la perte de signal du terminal radio du terminal Maître, hors de portée ou en défaut, condamne la communication entre les autres terminaux ou nécessite une reconfiguration de l'un d'eux en mode Maître, cette reconfiguration n'étant pas toujours possible sans manipulation complexe.

Certaines solutions maître/esclave basées sur le multiplexage temporel proposent la désignation automatique d'un maître quand un terminal reçoit des trames de données mais plus celles du maître (document GB 2 362 292 du 14 novembre 2001). Ces solutions résolvent le cas où le maître disparaît totalement (extinction, panne, ...), mais pas le cas très fréquent, où seuls certains terminaux sont hors de portée du maître, puisqu'elles permettent la désignation automatique d'un second maître pour les terminaux hors de portée, le réseau étant alors constitué de deux maîtres non forcément synchrones, et donc de deux références de temps différentes pour le multiplexage temporel : le fonctionnement est bloqué puisque cela va à l'encontre du principe même dudit multiplexage temporel. Dans cette situation, la continuité de la communication ne peut être garantie car il n'y a plus UN réseau synchronisé, mais DEUX réseaux indépendants émettant sur la même fréquence radio et créant des collisions de trames de données.

D'autres solutions maître/esclave basées sur le multiplexage temporel proposent la Reconfiguration automatique des terminaux (document EP 1 843 326 du 10 octobre 2007) pour remplacer le maître devenu défaillant (hors de portée, extinction, ...). Ces solutions permettent au réseau de définir automatiquement un nouveau maître de synchronisation mais ne répondent elles aussi que partiellement aux problèmes rencontrés sur le terrain : à titre d'exemple, le cas où seuls certains terminaux sont hors de portée du maître mais à portée entre eux n'est pas géré bien qu'extrêmement fréquent en utilisation. Cette solution présente donc le premier inconvénient de provoquer une coupure de la communication pendant la reconfiguration, les terminaux passant par un état de « veille » afin de se synchroniser sur le nouveau « Maître ». Second inconvénient, majeur : la mise en place d'un nouveau Maître génère un second réseau, à la fois autonome et perturbant les communications du premier.

On connaît aussi les documents GB 2 362 292 et EP 2 244 526. Cependant, les solutions divulguées par ces documents, ainsi que par le document EP 1 843 326 mentionné ci-dessus, sont toutes basées sur des techniques de désignation automatique d'un terminal maître pour gérer la synchronisation des autres terminaux. Ce qui implique les inconvénients mentionnés ci-dessus.

Ainsi, dans l'état de l'art actuel, tout terminal d'un réseau « full-duplex » sur un canal unique doit être en communication (à portée radio) avec LE terminal « Maître » ou LA « Base » pour lui permettre de communiquer avec les autres terminaux : il est donc impossible de garantir la continuité de communication entre des terminaux à portée radio entre eux sans dépendre de la communication de chacun d'eux avec un terminal « maître » ou « base ».

**Exposé de l'invention**

La présente invention vise à remédier à ces inconvénients.

La présente invention vise, selon un premier aspect, un terminal de communication, qui comporte :

- un circuit digital de communication utilisant un multiplexage temporel sur un seul canal radio, sélectionnable dans une bande de fréquences donnée, ledit système mettant en oeuvre une communication sans fil en mode «conférence» et «mains-libres» sur un réseau autonome entre au moins deux porteurs de dispositifs homologues et
- un moyen de synchronisation automatique, ici nommé « SyncAll », sur le signal de n'importe quel autre terminal d'un groupe de terminaux pour synchroniser son horloge interne sur une base de temps commune à tous les terminaux du groupe, permettant ainsi d'assurer la continuité de la communication entre chacun des terminaux du groupe à portée radio entre eux, même en cas de perte de communication avec l'un quelconque des autres terminaux du groupe.

Grâce à ces dispositions, on réalise une auto-synchronisation des terminaux d'un groupe, sans que l'un de ces terminaux ne soit un « maître » ou une « base » au regard du groupe des autres terminaux. Ainsi, la communication vocale ou de données n'est pas interrompue en cas de perte du signal de l'un quelconque des autres terminaux.

Dans des modes de réalisation, le circuit digital de communication, par application de la technique du multiplexage temporel, est configuré pour émettre et recevoir des données numériques sur un canal unique sélectionné, selon un cycle périodique commun à tous les terminaux du groupe, selon un numéro d'ordre unique dans le groupe de terminaux, les instants d'émission du circuit digital dépendant du numéro d'ordre unique dans le groupe, les instants de réception ayant lieu pendant le reste du cycle périodique, ledit cycle périodique étant basé sur la base de temps commune à tous les terminaux du groupe définie lors de la synchronisation des terminaux.

Dans des modes de réalisation, le circuit digital de communication est configuré, lors de la mise en service du terminal, pour écouter le réseau pour détecter l'émission éventuelle d'une trame de synchronisation ou de données émanant d'un terminal d'un autre groupe et à changer automatiquement de canal vers un canal libre pour initier une communication avec les terminaux de son propre groupe.

Dans des modes de réalisation, le circuit digital de communication est configuré, lors de la mise en service du terminal, pour écouter le réseau pour détecter l'émission éventuelle d'une trame de synchronisation ou de données émanant d'un autre terminal du même groupe.

Dans des modes de réalisation, le moyen de synchronisation est configuré pour se synchroniser sur le premier signal de synchronisation ou de données émanant d'un autre terminal du même groupe, et en cas de non réception d'un signal, à émettre, à intervalles de temps dépendants de son numéro d'ordre, son propre signal de synchronisation à l'adresse des autres terminaux du groupe pour initier une communication.

Dans des modes de réalisation, chaque trame envoyée par un terminal comporte à la fois l'identifiant du groupe auquel ledit terminal appartient, le numéro d'ordre dudit terminal dans le groupe ainsi que le chaînage ordonné à n niveaux des numéros d'ordre des terminaux synchronisés entre eux. Par exemple avec n=2, si un terminal « T5 » est synchronisé sur un terminal « T4 » qui est lui-même synchronisé sur un terminal « T2 », le chaînage envoyé dans les trames transmises par le terminal « T5 » est : « T4, T2 ».

Dans des modes de réalisation, la synchronisation d'un terminal sur une trame consiste à caler l'horloge interne dudit terminal sur celle du terminal dont ledit terminal vient de recevoir ladite trame. Ainsi, par transmissions successives entre eux, les terminaux ont tous une même référence de base de temps pour le cycle temporel utilisé pour le multiplexage temporel. Par exemple, si un terminal « T3 » est à l'origine de la communication, il propage la synchronisation à un terminal « T1 » qui peut la propager au terminal « T4 », et ainsi de suite.

Dans des modes de réalisation, les terminaux effectuent à intervalle régulier des re-synchronisations par recalage de leur horloge interne sur celle du terminal dont ils ont reçu une trame de données ou de synchronisation. Ces re-synchronisations périodiques sont nécessaires pour pallier les dérives temporelles des horloges internes inhérentes à la précision des composants électroniques (quartz) utilisés, ces dérives pouvant décaler les cycles temporels et induire un chevauchement au bout d'un certain temps, avec perturbation des transmissions radio. La fréquence de ces re-synchronisations dépend de la précision du quartz utilisé, la période entre deux re-synchronisations étant ainsi, généralement, de plusieurs minutes.

De cette manière, par re-synchronisations successives automatiques par chacun des terminaux sur le signal émis par n'importe lequel des autres terminaux du groupe, le réseau se passe d'un « Maître » gérant la synchronisation, aussi bien au démarrage des terminaux que durant l'utilisation du réseau autonome ainsi créé. Ce réseau permet ainsi la continuité des communications entre les terminaux du groupe, et évite l'obligation de reconfigurer manuellement ou automatiquement l'un des terminaux «Esclaves» en mode «Maître» ou «Base» en cas de perte de signal de synchronisation ou de données provenant dudit « Maître » ou de ladite « Base », ce qui corrige les inconvénients d'autres systèmes existants qui demandent une manipulation particulière souvent incompatible avec les besoins des utilisateurs sur le terrain.

De plus, cette synchronisation effectuée en permanence sur n'importe quel terminal du groupe garantit la continuité de communication entre chacun des terminaux qui sont en zone de portée radio entre eux. Il n'est donc nullement nécessaire que chaque terminal soit à portée radio d'un terminal « Maître » pour pouvoir communiquer avec les terminaux proches de lui, contrairement aux systèmes existants.

Dans des modes de réalisation, le circuit digital de communication est configuré pour détecter l'absence de signaux émis par un terminal homologue de son groupe et, en cas de détection de cette absence, passer en mode d'initialisation d'une communication qui consiste à alterner les phases d'écoute du réseau pour détecter l'émission éventuelle d'un signal de synchronisation ou de données émanant d'un autre terminal du même groupe, et les phases de tentatives d'initialisation d'une communication par émission de son propre signal de synchronisation à l'adresse des autres terminaux du groupe pour initier une communication. La fréquence d'alternance entre ces deux phases dépend du numéro d'ordre du terminal, afin d'éviter que les terminaux ne tentent simultanément d'initier une communication.

Dans des modes de réalisation, les terminaux mettent en oeuvre une priorité, lors de la re-synchronisation, basée sur la suite de nombres présente dans les trames reçues des autres terminaux comportant le numéro d'ordre du terminal émetteur ainsi que le chaînage ordonné des numéros d'ordre des terminaux synchronisés entre eux. Ainsi, s'ils reçoivent des trames de synchronisation ou de données de plusieurs terminaux durant le temps alloué à la re-synchronisation (par exemple 30 secondes), ils se synchronisent en priorité sur une trame reçue du terminal ayant le numéro d'ordre le plus petit dans le groupe (noté « iMin ») ou, à défaut, du terminal le plus « proche » dudit terminal actif ayant ce numéro d'ordre « iMin ». La « proximité » signifie ici le nombre de noeuds (terminaux en portée radio entre eux) séparant le terminal dudit terminal ayant le plus petit numéro d'ordre, et non pas une proximité géographique.

L'algorithme permettant de déterminer cette proximité est le suivant :

- quand un terminal reçoit des trames de plusieurs terminaux, il recherche dans chacune d'elles le plus petit numéro d'ordre « iMin » présent entre le numéro d'ordre de l'émetteur et le chaînage reçu des terminaux synchronisés
- si le nombre « iMin » n'est présent que dans une des trames reçues, le terminal se synchronise prioritairement sur le terminal ayant transmis cette trame.
- si le nombre « iMin » est présent dans des trames émises par plusieurs terminaux, le terminal retenu pour la synchronisation est le terminal où le nombre « iMin » a le rang le plus haut dans la trame, le rang étant défini ci-après:

  o numéro du terminal dans le groupe (rang « R » le plus haut)
  o numéro du premier terminal dans le chaînage (rang R-1)
  o numéro du second terminal dans le chaînage (rang R-2)
  o etc. (rang R- x).

Ce principe de synchronisation prioritaire permet à chaque terminal de se synchroniser en priorité avec un terminal étant lui-même synchronisé directement ou indirectement avec le terminal actif ayant le numéro d'ordre le plus petit dans le groupe. Ce mécanisme évite l'apparition de plusieurs « sous-réseaux », gérés par des horloges non calées entre elles, au sein d'un groupe de plus de trois terminaux (par exemple T1 et T2 synchronisés ensemble, d'une part, et T3 et T4 synchronisés ensemble, d'autre part) avec le risque de collision de trames.

Dans des modes de réalisation, le terminal continue d'envoyer ses trames de données ou de synchronisation durant le temps alloué pour la re-synchronisation : il n'y a donc pas rupture de communication durant les phases de re-synchronisation.

Dans des modes de réalisation, le terminal objet de la présente invention comporte, en outre, au moins un détecteur et/ou des fonctions internes permettant d'assurer des déclenchements d'alertes ou l'envoi de messages aux autres terminaux du groupe par le circuit digital de communication.

On assure ainsi la sécurisation des utilisateurs des terminaux, notamment des travailleurs des milieux hostiles, confinés ou en environnements agressifs. Ces terminaux sont, par exemple, dotés d'un équipement sonore ou vibratoire interne au boîtier (de type haut parleur piézoélectrique ou « buzzer » par exemple) permettant de générer vers les autres utilisateurs des signaux d'appel ou d'alarme indépendant du circuit audio.

Ces terminaux peuvent aussi être dotés d'accéléromètres et/ou de gyroscopes intégrés pour détecter des chocs ou l'immobilité du porteur du terminal ainsi que son orientation dans le plan vertical. Dans des modes de réalisation, au moins un terminal est doté de capteurs de type accéléromètres (ADLX335, marque déposée, ou équivalent) déterminant les chocs subis et de moyens de détection d'immobilité par un paramétrage des seuils d'accélérations subies pendant un temps donné. Ces informations sont transmises par radio aux autres terminaux.

Dans des modes de réalisation, au moins un terminal est doté de capteurs de température, de gaz ou d'atmosphères potentiellement dangereux (capteurs CMOS pour $H_2$, CO, $CO_2$, NOx, etc.) pour communiquer ces informations au porteur et aux autres terminaux.

Préférentiellement, les conditions de déclenchement des alertes sont paramétrables.

Dans des modes de réalisation, au moins un terminal est doté de capteurs ou senseurs permettant de connaître la position précise du terminal (module intégré de type récepteur GPS DELORME GPS2058-10, module Galiléo, marques déposées, ou équivalent).

Dans des modes de réalisation, le dispositif objet de la présente invention comporte, en outre, un moyen de déterminer si un son doit ou pas être représenté par un signal émis par le circuit digital de communication, le circuit digital de communication étant configuré pour, en cas d'absence de son à représenter, constituer et émettre une trame d'une taille inférieure à une trame représentant du son et signifiant cette absence.

Les informations envoyées par radio sont donc nettement réduites, et, en conséquence, les temps de transmission beaucoup plus courts, d'où une occupation beaucoup plus faible de la bande radio.

Dans des modes de réalisation, le circuit digital de communication est configuré pour, en cas d'absence de son à représenter, n'émettre qu'une seule trame signifiant cette absence pour une pluralité de cycles de communication.

Ainsi, au lieu d'envoyer les trames signifiant « Pas de son » à chaque cycle du cycle temporel (comme ce qui est fait lorsqu'on transmet du « son »), on n'envoie cette trame qu'une fois sur n. Par exemple n = 10. Ainsi, lors des phases de silence d'un utilisateur, on émet les données n fois moins souvent, d'où une occupation encore beaucoup plus faible de la bande de fréquences et un gain d'autonomie.

Durant les phases de silence, on émet donc non seulement moins d'informations, mais aussi moins souvent. Cette solution permet également de profiter des moments de silence pour transférer des données en provenance des capteurs intégrés au terminal.

On décrit, ci-dessous, un autre aspect de la présente invention.

On connaît les casques audio sans fil, éventuellement munis de protection antibruit et permettant d'écouter de la musique ou de converser par liaison radio (souvent de type Bluetooth, marque déposée) avec un interlocuteur par l'intermédiaire d'un téléphone cellulaire ou une liaison radio de type « walkie-talkie » par exemple.

D'autres types de casques sont munis d'une protection antibruit, passive ou active, et reliés à des systèmes de communication filaire de type « intercom » pour des conversations à deux personnes ou plus, avec ou sans alternat.

Ainsi, aucun des casques Audio connus ne permet de proposer simultanément les trois fonctions suivantes :

1. Conversation Audio sans fil en mode full-duplex (mode « conférence ») à plus de deux personnes, sur un canal radio unique, sans base ni maître de synchronisation et
2. Conversation en mode «mains libres» sur un réseau radio autonome et
3. Protection au bruit, active ou passive, pour améliorer la qualité audio et protéger l'utilisateur.

La présente invention vise aussi à remédier à ces inconvénients.

La présente invention concerne ainsi un casque Audio qui incorpore un terminal objet de la présente invention.

Ce casque est ainsi communiquant multi-utilisateurs sans fil et, plus particulièrement, un casque audio intégrant un système autonome de communication vocale par radio intégré, communicant en mode «conférence» ou «full-duplex» avec au moins un autre casque similaire. Chaque casque du système est, préférentiellement, muni de divers capteurs ou senseurs permettant de détecter des chocs ou l'immobilité du porteur, des atmosphères potentiellement dangereuses ou toxiques et/ou la localisation du casque, et de transmettre des alarmes ou un signal d'appel.

Dans des modes de réalisation, le casque objet de l'invention comporte une coque offrant une protection antibruit mécanique ou acoustique à l'utilisateur.

Dans des modes de réalisation, le casque objet de l'invention comporte une protection acoustique «antibruit» de type active, par émission de bruits négatifs par un transducteur électro-acoustique, les messages sonores reçus par le circuit digital de communication étant émis par ledit transducteur électro-acoustique.

D'autres avantages, buts et caractéristiques particulières de ce casque étant similaires à ceux du terminal objet de la présente invention, ils ne sont pas rappelés ici.

**Brève présentation des figures**

D'autres avantages, buts et caractéristiques particulières de la présente invention ressortiront à la lecture de la description qui va suivre faite, dans un but explicatif et nullement limitatif, en regard des dessins annexés, dans lesquels :

- la figure 1 représente, schématiquement, un réseau de terminaux objets de la présente invention,
- la figure 2 représente, schématiquement, un mode de réalisation particulier d'un casque objet de la présente invention comportant un mode de réalisation particulier d'un terminal objet de la présente invention,

- la figure 3 représente, sous la forme d'un logigramme, des étapes mises en oeuvre dans un mode de réalisation du procédé de communication objet de la présente invention,
- la figure 4 représente, sous la forme d'un logigramme, des étapes mises en oeuvre dans une variante du procédé de communication objet de la présente invention et
- la figure 5 représente, schématiquement, une configuration particulière d'un réseau de terminaux objets de la présente invention.

## Exposé d'au moins un mode de réalisation de l'invention

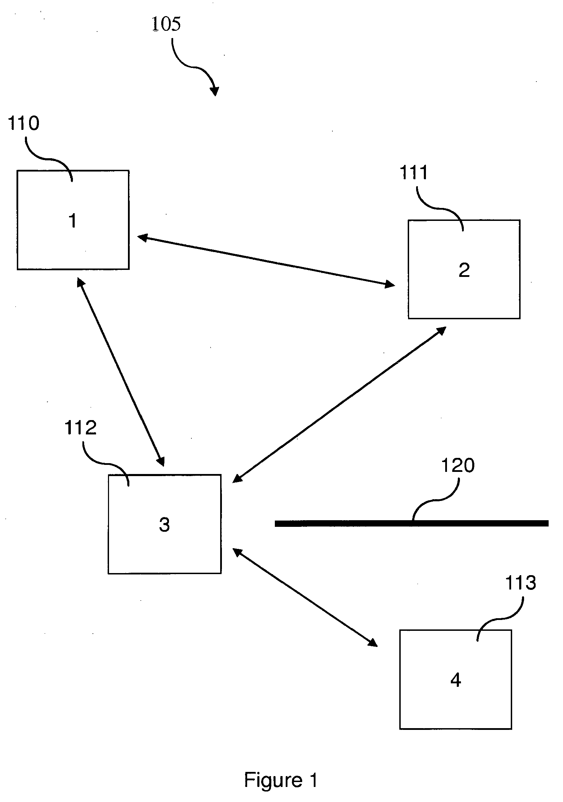

On observe, en figure 1, un réseau 105 de terminaux 110 à 113 distribués sur un site (non représenté), par exemple un terrain et/ou des bâtiments. Les flèches 115 représentent les communications entre les terminaux 110 à 113. Comme on l'observe en figure 1, il peut arriver que l'un des terminaux, ici le terminal 113 ne soit plus en communication avec au moins un autre terminal, ici les terminaux 110 et 111. Par exemple, cela est dû à l'éloignement entre ces terminaux, à l'atténuation des signaux émis par l'un des terminaux, par exemple par un obstacle 120, colline ou bâtiment, par une faiblesse de batterie, à des interférences ou toute autre cause connue de l'homme du métier des télécommunications sans fil.

Dans un réseau de l'art antérieur, si le terminal 113 est le Maître et donc fournit la synchronisation aux autres terminaux du réseau 105, ceux qui ne reçoivent pas ses signaux ne peuvent plus communiquer. Une procédure complexe doit être mise en oeuvre pour rétablir une synchronisation, en l'occurrence création manuelle ou dynamique d'un nouveau terminal Maître parmi ceux qui ne sont plus à portée du terminal Maître 113. Mais, dans cette configuration, le nouveau Maître est le terminal 110 ou le terminal 111, et en conséquence, le terminal 112 reçoit des trames de deux Maîtres : le terminal 110 ou 111 et le terminal 113 car il est à portée radio avec ces trois terminaux qui sont chacun maître de leur sous-réseau, ce qui est en contradiction avec la technologie Maître-Esclave en multiplexage temporel qui repose sur le fait d'avoir un Maître unique et plusieurs Esclaves. Ce cas n'est donc pas gérable avec les techniques actuelles, et les réalisations connues laissent les terminaux 110 et 111 déconnectés du réseau de communication 105 tant qu'ils ne sont pas à portée radio du terminal 113.

Dans la même situation, dans un réseau de l'art antérieur, lorsque le terminal 110 est le Maître et donc fournit la synchronisation aux autres terminaux du réseau 105, ceux qui ne reçoivent pas ses signaux ne peuvent plus communiquer. En l'occurrence, le terminal 113 n'étant pas à portée du terminal 110 qui est le Maître, il est déconnecté du réseau de communication 105, alors qu'il est à portée radio du terminal 112, et qu'il pourrait continuer à être en communication avec lui. La communication radio entre les terminaux à portée radio les uns des autres ne peut donc être garantie avec les technologies Maître/Esclave qui nécessitent la liaison radio entre chacun des terminaux du groupe et le terminal Maître ou la Base.

Comme exposé dans la description qui va suivre, au contraire, en mettant en oeuvre la présente invention, les terminaux du réseau se re-synchronisent automatiquement dans ce genre de circonstance et garantissent une continuité de communication entre chacun des terminaux en portée radio entre eux.

En effet, grâce au principe de synchronisation, nommé « SyncAll », sur n'importe quel terminal du groupe proposé dans la présente invention, les terminaux 110, 111 et 112 étant en portée radio entre eux, ils communiquent ensemble et se synchronisent mutuellement les uns avec les autres, et préférentiellement avec le terminal ayant le plus petit numéro d'ordre dans le groupe, à savoir le terminal 110 qui a le numéro « 1 ». Le terminal 111 et le terminal 112 se synchronisent donc sur le terminal 110 tandis que le terminal 110 se synchronise sur le terminal 111. De même, le terminal 113 étant en portée radio du terminal 112, il se synchronise avec le terminal 112 et continue à faire partie du réseau lié à ce groupe de terminaux, même s'il ne peut recevoir les signaux du terminal 110 et du terminal 111 à cause de l'éloignement. Ainsi, le terminal 113 peut continuer à recevoir et à émettre ses données avec le terminal 112 qui est en zone de portée radio avec lui, même s'il est hors de portée des terminaux 110 et 111. Dans le même temps, le terminal 112 reçoit et émet des données avec l'ensemble des terminaux 110, 111 et 113 qui sont en portée radio avec lui.

Ainsi, quelle que soit la configuration de zone de portée radio rencontrée, la communication est assurée dans le groupe entre les terminaux en portée radio entre eux et la communication ne dépend pas de la bonne communication entre les terminaux et un terminal spécifique jouant le rôle de Maître. On constate par ailleurs que la re-synchronisation prioritaire permet d'interdire la création de deux sous-réseaux indépendants, constitués des terminaux 110 et 111, d'une part, et des terminaux 112 et 113, d'autre part. En effet, le principe de re-synchronisation sur le terminal ayant le plus petit numéro d'ordre (le terminal 110 dans notre exemple) implique que les autres terminaux se synchronisent préférentiellement sur lui ou sur ceux des terminaux qui sont proches, en termes de nombre de noeuds, du terminal ayant le plus petit numéro d'ordre et ne peuvent donc pas créer de sous-réseau indépendant.

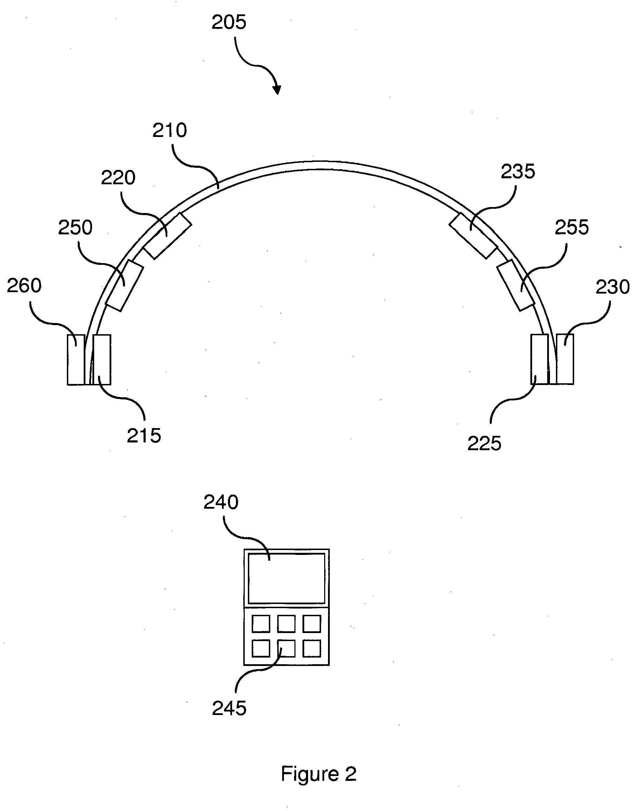

On observe que les terminaux illustrés en figure 1 sont soit portés par leur utilisateur dans une poche ou à la main, soit intégrés dans un vêtement ou un accessoire vestimentaire, comme une cagoule, un masque ou un casque. Cette dernière configuration est illustrée en figure 2, dans le cadre d'un casque de protection de la tête de l'utilisateur et antibruit. La présente invention s'applique donc particulièrement aux personnes devant (ou étant incités à) porter un masque et/ou un casque, par exemple des pompiers, des militaires, des travailleurs en milieux hostiles ou sur chantier, des parachutistes, des skieurs, des motocyclistes et des cyclistes.

On observe, en figure 2, un casque 205 comportant une coque 210, au moins un transducteur électro-acoustique 215, un capteur de localisation 220, un capteur de position verticale 225, un capteur de valeur de grandeur physique d'environnement 230, un capteur de grandeur physiologique 235, un écran de visualisation 240, un clavier 245, un circuit 250 de traitement des signaux issus des capteurs, un circuit digital de communication 255 intégrant une antenne d'émission-réception (non représentée). Optionnellement, un circuit de communication secondaire 260, intégrant une antenne (non représentée) fournit une redondance de communication.

La coque 210 fournit une protection mécanique des oreilles ou du crâne de l'utilisateur. Le transducteur électro-acoustique 215 émet des ondes sonores en fonction d'un signal électrique. Par exemple, le transducteur électro-acoustique 215 est un haut-parleur ou un cristal piézoélectrique. Dans des modes de réalisation, le transducteur électro-acoustique diffuse des sons par conduction osseuse.

Le casque 205 comporte aussi un microphone (non représenté), par exemple basé sur la détection de son ou de vibrations véhiculés par conduction osseuse.

Le capteur de localisation 220 est configuré pour fournir la localisation géographique du casque 205. Par exemple, le capteur de localisation 220 est basé sur les systèmes GPS (acronyme de Global Positioning System pour système de positionnement global) ou Galiléo (marque déposée) par exemple.

Le capteur de position verticale 225 est, par exemple, basé sur un inclinomètre, ou gyroscope, tel que ceux utilisés dans certaines tablettes informatiques.

Le capteur de valeur de grandeur physique d'environnement 230 est configuré pour capter une température, des vibrations ou des gaz nocifs, par exemple. Ce capteur peut aussi comporter un accéléromètre et/ou un gyroscope pour détecter des chocs ou l'immobilité du porteur du casque 205. La détection d'immobilité est effectuée par un paramétrage des seuils d'accélérations subies pendant un temps donné. Ainsi, une absence d'accélération supérieure à une valeur prédéterminée, pendant une durée prédéterminée déclenche la détection de l'immobilité du porteur du casque 205.

Dans des modes de réalisation, le capteur 230 est doté de capteurs de température, de gaz ou d'atmosphères potentiellement dangereuse, explosive ou toxique (capteurs CMOS pour $H_2$, CO, $CO_2$, NOx, etc.).

Le capteur de grandeur physiologique 235 est configuré pour mesurer le pouls ou la température corporelle de l'utilisateur. D'autres exemples de tels capteurs d'environnement ou physiologiques sont donnés dans la demande de brevet européen n° 09784329.6.

Les grandeurs mesurées sont utilisées par le circuit de traitement 250 pour communiquer ces informations au porteur et aux autres terminaux 205.

Les conditions de déclenchement des différentes alertes sont paramétrables.

L'écran de visualisation 240 et le clavier 245 sont, par exemple, intégrés dans un boîtier porté au poignet et communiquent à courte distance avec le circuit de traitement 250, par exemple en mettant en oeuvre la norme Bluetooth. Dans des modes de réalisation, le terminal 205 affiche sur l'écran 240 ses propres informations de localisation et celles d'autres terminaux 205 pour donner des indications de direction vers chacun de ces terminaux 205, à des fins de recherche par exemple.

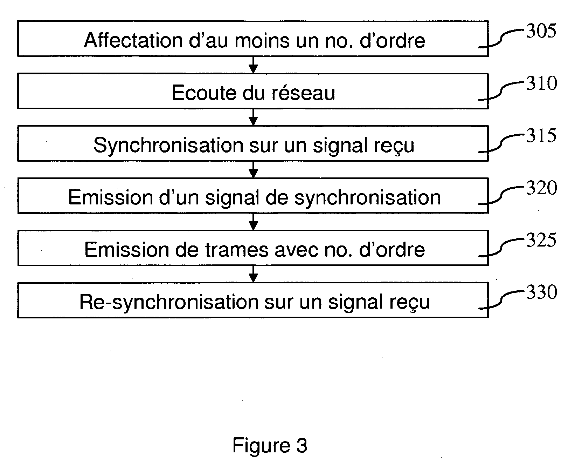

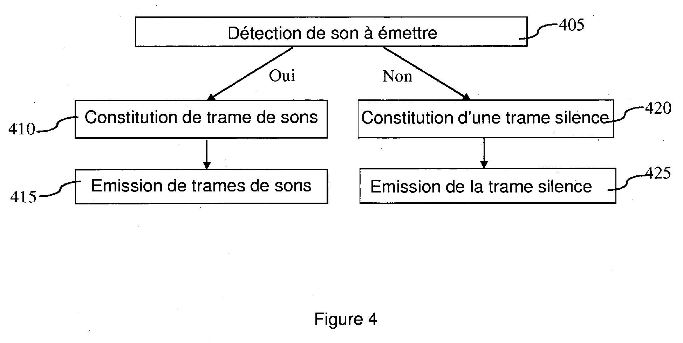

Le circuit 250 de traitement des signaux issus des capteurs est basé sur un microprocesseur et est configuré pour mettre en oeuvre un programme informatique qu'il conserve en mémoire non volatile. Les instructions de ce programme informatique permettent la mise en oeuvre des fonctions décrites ci-dessous et, notamment, en regard des figures 3 et 4. Le circuit de traitement 250 comporte un moyen de synchronisation qui met en oeuvre un protocole de synchronisation régulière décrit ci-dessous. Le circuit de traitement 250 réalise aussi des fonctions internes permettant d'assurer des déclenchements d'alertes ou l'envoi de messages par le circuit digital de communication 255. On assure ainsi la sécurisation des utilisateurs des terminaux 205, notamment des travailleurs des milieux hostiles, confinés ou en environnements agressifs. Ces terminaux 205 sont, par exemple, dotés d'un équipement sonore ou vibratoire interne au boîtier (non représentés, de type haut-parleur piézoélectrique ou «buzzer» par exemple) permettant de générer des signaux d'appel ou d'alarme indépendant du circuit digital de communication 255, par exemple mettant en oeuvre le circuit de communication secondaire 260.

Le circuit de communication 255 utilise, pour communiquer avec des circuits similaires, un multiplexage temporel sur un seul canal radio, sélectionnable dans une bande de fréquences donnée, ledit système mettant en oeuvre une communication sans fil en mode «conférence» et «mains-libres» sur un réseau autonome.

Le moyen de synchronisation automatique, nommé « SyncAll », sur le signal de n'importe quel autre terminal d'un groupe de terminaux permet d'assurer la continuité de la communication entre chacun des terminaux du groupe à portée radio entre eux, même en cas de perte de signal de l'un quelconque des autres terminaux du groupe. Ainsi, le réseau réalise une auto-synchronisation des terminaux, sans que l'un d'entre eux ne soit ni un « maître » ni une « base » au regard des autres terminaux : de ce fait la communication n'est pas interrompue entre les terminaux à portée radio entre eux, en cas de perte du signal de l'un quelconque des autres terminaux.

Le circuit de traitement 250 est configuré pour faire émettre, par le transducteur électro-acoustique 215 des bruits négatifs, c'est-à-dire des ondes sonores en opposition de phase avec les ondes sonores environnantes, de telle manière que l'oreille de l'utilisateur soit protégée contre les sons de trop forte amplitude. La technique des bruits négatifs étant connue de l'homme du métier, elle n'est pas détaillée ici.

Le circuit de traitement est aussi configuré pour superposer à ces bruits négatifs des sons représentés par les trames de données reçues par le circuit digital de communication 255.

Le circuit de traitement 250 comporte des moyens d'affectation au terminal 205, lors de sa mise en route, du numéro de groupe auquel il appartient et d'un numéro d'ordre unique dans ce groupe de terminaux. Ce numéro de groupe et le numéro d'ordre sont définis par l'utilisateur par configuration du terminal, qu'une affectation ait déjà été réalisée à la fabrication du terminal, ou non.

Le circuit digital de communication 255 est configuré pour émettre et recevoir des données numériques sur un canal unique sélectionné, selon un cycle périodique commun à tous les terminaux du groupe, selon un numéro d'ordre unique dans le groupe de terminaux, les instants d'émission du circuit digital dépendant du numéro d'ordre dans le groupe, les instants de réception ayant lieu pendant le reste du cycle périodique.

Le circuit digital de communication 255 est configuré pour émettre, pendant les instants d'émission, une trame portant son propre signal de synchronisation, le numéro du groupe auquel il appartient et le numéro d'ordre du terminal 205 dans le groupe, ainsi que le chaînage à n niveaux des numéros d'ordre des terminaux synchronisés entre eux.

Le circuit digital de communication 255 est configuré pour, lors de la mise en service du terminal 205, écouter le réseau pour détecter l'émission éventuelle d'un signal de synchronisation ou de données émanant d'un terminal d'un autre groupe, et en cas de détection d'une telle transmission de données, pour basculer automatiquement sur le canal de communication suivant et ce jusqu'à trouver un canal libre.

Le circuit digital de communication 255 est configuré pour, lors de la mise en service du terminal 205, écouter le réseau pour détecter l'émission éventuelle d'un signal de synchronisation ou de données émanant d'un autre terminal du même groupe.

Le moyen de synchronisation est configuré pour se synchroniser sur le premier signal de synchronisation ou de données émanant d'un autre terminal 205 du même groupe, et en cas de non réception de signal de synchronisation ou de données, à intervalle régulier dépendant de son numéro d'ordre, émettre son propre signal de synchronisation à l'adresse des autres terminaux du groupe pour initier une communication.

Le circuit digital de communication 255 est configuré pour, à intervalle régulier, effectuer des re-synchronisations par recalage de son horloge interne sur celle du terminal dont il a reçu une trame de données ou de synchronisation. Ces re-synchronisations périodiques sont nécessaires pour pallier les dérives temporelles des horloges internes inhérentes à la précision des « quartz » utilisés, ces dérives pouvant décaler les cycles temporels et induire un chevauchement au bout d'un certain temps avec perturbation des transmissions radio. La période entre ces re-synchronisations dépend de la précision du quartz utilisé, par exemple toutes les cinq minutes dans un mode de réalisation basé sur un quartz de type FOX924B.

De cette manière, par re-synchronisations successives automatiques par chacun des terminaux 205 sur le signal émis par n'importe lequel des autres terminaux 205 du groupe, le réseau 105 se passe d'un « Maître » ou d'une « Base » gérant la synchronisation, aussi bien au démarrage des terminaux, que durant l'utilisation du réseau 105 autonome ainsi créé. Le protocole de synchronisation mis en oeuvre sur le réseau 105 permet ainsi la continuité des communications entre les terminaux 205 du groupe à portée radio les uns des autres, même en cas de perte de signal de synchronisation ou de données d'un quelconque autre terminal 205, et évite l'obligation de reconfigurer l'un des terminaux « Esclaves » en mode « Maître » ou « Base ».

Concernant le protocole de communication et de synchronisation automatique mis en oeuvre sur le réseau 105, chaque terminal 205 est affecté à un groupe de terminaux, par un code par exemple. Chaque terminal 205 du groupe est capable d'émettre et de recevoir des données numériques sur un canal unique sélectionné, selon un cycle périodique commun à tous les terminaux 205 du groupe. Le cycle périodique est réellement commun à l'ensemble des terminaux car les horloges internes sont toutes synchronisées entre elles lors des phases de synchronisation/re-synchronisation des terminaux entre eux. Chaque terminal 205 portant un numéro d'ordre unique dans le groupe de terminaux émet, pendant un instant dépendant de son numéro d'ordre dans le groupe, et reste en mode « écoute » pendant le reste du cycle périodique.

Comme illustré en figure 3, pour chaque terminal 205, à la mise en route, ce terminal 205 se voit affecter un numéro d'ordre « actif » unique dans le groupe de terminaux, au cours d'une étape 305.

Dans des variantes, au moins un terminal se voit affecter un numéro d'ordre « passif » lui permettant un mode « écoute seule » dans un groupe déterminé.

Comme le numéro d'ordre « actif », le numéro d'ordre « passif » est défini soit par l'utilisateur, par configuration du terminal, soit par le fournisseur.

Chaque terminal 205 commence la communication, dès sa mise en service, au cours d'une étape 310, par une phase initiale d'écoute du réseau, d'une durée qui dépend de son numéro d'ordre dans le groupe, pour détecter l'émission éventuelle d'un signal de synchronisation ou de données émanant d'un autre terminal 205 du même groupe.

Durant cette phase initiale d'écoute, le terminal 205 se synchronise, au cours d'une étape 315, sur le premier signal de synchronisation ou de données émanant d'un autre terminal du même groupe. En cas de non réception de signal de synchronisation ou de données, au cours d'une étape 320, le terminal 205 émet à intervalle régulier dépendant de son numéro d'ordre, son propre signal de synchronisation à l'adresse des autres terminaux 205 du groupe pour initier la communication. Ces émissions se font en alternance avec les phases d'écoute du réseau.

Puis, au cours d'une étape 325, le terminal 205 émet, pendant une partie du cycle périodique dépendant de son numéro d'ordre dans le groupe, une trame portant son propre signal de synchronisation et son numéro d'ordre dans le groupe. Chaque terminal 205 détermine le moment de son émission en fonction de son numéro d'ordre dans le groupe et des numéros d'ordre des autres terminaux 205 présents dans le groupe, et affecte le temps restant libre du cycle périodique commun aux phases d'écoute des autres terminaux.

On note que c'est la trame elle-même qui sert à la synchronisation : chaque trame envoyée par un terminal est identifiée par le numéro du groupe, le numéro d'ordre et le chaînage à n niveaux des numéros d'ordre des terminaux synchronisés entre eux, que ce soit une trame de son, une trame de donnée ou une trame courte dite « de synchronisation ». A chaque trame reçue, le terminal sachant de quel autre terminal il s'agit, peut se synchroniser sur cette trame s'il est en phase de synchronisation ou de re-synchronisation en recalant son horloge interne sur celle du terminal dont il a reçu la trame.

Au cours d'une étape 330, le terminal 205 relance, à un instant dépendant de son numéro d'ordre, une phase de re-synchronisation sur le signal reçu d'un terminal du groupe. On note qu'il y a deux cas de re-synchronisation :

1) La re-synchronisation sur perte de signal

Si le terminal ne reçoit plus aucune trame d'aucun autre terminal du groupe (hors de portée par exemple), il passe en mode synchronisation :

- le terminal écoute le réseau pour recevoir une éventuelle trame d'un autre terminal du groupe,
- en cas de réception d'une telle trame, le terminal se synchronise sur cette trame, puisque cette trame contient le numéro d'ordre du terminal émetteur, le terminal récepteur détermine l'intervalle de temps qui lui est alloué pour émettre au cours du cycle périodique d'émission, les autres intervalles de temps lui servant à la réception des trames émises par les autres terminaux du groupe. La synchronisation consiste à mettre en phase l'horloge interne du terminal sur celle du terminal dont il a reçu la trame pour définir le cycle périodique commun et
- en cas de non réception d'une telle trame, le terminal effectue, à intervalle régulier dépendant de son numéro d'ordre et en alternance avec les phases d'écoute du réseau, une émission de trame courte de synchronisation (contenant son numéro d'ordre), pour permettre à d'autres terminaux de se synchroniser avec lui.

2) Les re-synchronisations automatiques périodiques

Pour pallier les dérives temporelles des horloges des différents terminaux entre elles, il est nécessaire, à intervalle de temps régulier (la période dépendant de la qualité et la précision des horloges des terminaux, cinq minutes par exemple avec un quartz FOX924B) de re-synchroniser les terminaux entre eux. Quand le délai représenté par cet intervalle de temps est écoulé, le terminal, pendant une durée définie (par exemple 30 secondes), utilise une trame reçue préférentiellement du terminal actif du groupe ayant le numéro d'ordre le plus petit dans le groupe, ou à défaut du terminal étant le plus proche (en nombre de noeuds dans le réseau) dudit terminal ayant le plus petit numéro (que ce soit une trame de son, de donnée ou de synchronisation) pour se re-synchroniser sur cette trame. Passé ce délai de re-synchronisation prioritaire, le terminal se synchronise sur la première trame reçue d'un autre terminal du groupe. Ces re-synchronisations successives permettent de garantir que le cycle temporel est bien commun à l'ensemble des terminaux par propagation d'une horloge universelle commune entre les terminaux. A noter que durant cette phase de re-synchronisation, le terminal continue d'émettre ses trames dans l'intervalle de temps qui lui est alloué au sein du cycle périodique commun et garantit ainsi une continuité de la communication, y compris durant ces phases de re-synchronisation.

En termes d'étapes, les terminaux ayant chacun un identifiant de groupe et un numéro d'ordre défini (par configuration usine ou par configuration utilisateur), ils effectuent :

- un démarrage du terminal,
- une entrée en mode de synchronisation [BOUCLE SYNCHRO]

  o en cas de réception d'une trame d'un autre terminal du groupe, une synchronisation de l'horloge interne sur cette trame et sortie [BOUCLE SYNCHRO]
o en l'absence de réception d'une trame, une émission d'une trame de synchronisation, à intervalle de temps régulier dépendant de son numéro d'ordre, pour tenter d'initier la communication

- une entrée en mode de communication [BOUCLE PERMANENTE] avec

o émission/réception de trames selon les intervalles de temps dans le cycle temporel,
o en cas d'absence totale de réception d'aucun autre terminal du groupe durant plusieurs cycles, un arrêt des transmissions et un passage en mode de synchronisation décrit ci-dessus [BOUCLE SYNCHRO]
o lorsque le délai pour effectuer la re-synchronisation des horloges est atteint, une re-synchronisation du cycle temporel sur la trame reçue du terminal actif ayant le plus petit numéro d'ordre dans le groupe, ou à défaut du terminal étant le plus proche (en nombre de noeuds dans le réseau) dudit terminal ayant le plus petit numéro.

De cette manière et par re-synchronisations successives automatiques par chacun des terminaux 205 sur le signal émis par n'importe lequel des autres terminaux 205 du groupe, il est possible de se passer d'un Maître ou d'une Base de synchronisation au démarrage des terminaux, comme durant l'utilisation du réseau autonome ainsi créé.

Ce mode de réalisation particulier de la présente invention, par un mode de synchronisation dynamique sur n'importe lequel des terminaux 205 du groupe, permet la continuité des communications entre chacun des membres du groupe en portée radio les uns avec les autres, même en cas de perte de signal d'un quelconque autre terminal du groupe, et évite l'obligation de reconfigurer l'un des terminaux « Esclaves » en mode « Maître », ce qui corrige les inconvénients d'autres systèmes existants qui demandent une manipulation particulière souvent incompatible avec les besoins des utilisateurs sur le terrain.

Dans des modes de réalisation, le terminal 205 est configuré pour émettre et recevoir des données de localisation à destination ou depuis d'autres terminaux du groupe. De plus, dans des modes de réalisation, le terminal 205 est configuré pour analyser les informations de localisation d'autres terminaux du groupe en fonction des informations reçues et du numéro d'ordre identifiant chaque terminal 205 du groupe.

Dans des modes de réalisation, le casque 205 comporte un moyen d'appel des autres casques d'un groupe de casques, ce moyen d'appel étant indépendant du circuit digital de communication vocale et étant configuré pour transmettre un signal d'alarme ou un son aux autres casques du groupe.

Dans des modes de réalisation, le casque 205 comporte un moyen (non représenté) de passage en mode d'écoute de n'importe quel autre casque du même type, même appartenant à un groupe différent, par simple connaissance d'un identifiant du groupe dans lequel se trouve ledit autre casque 205.

Dans des modes de réalisation, ce casque 205 comporte un moyen de passage en mode « secret » interdisant d'accéder à ses données, par un codage des données transmises à tout autre casque du même type, même en mode écoute et connaissant l'identifiant du groupe dudit casque.

Un mode de multiplexage temporel mis en oeuvre dans la présente invention est donné ci-dessous, avec les conventions suivantes :

- la durée d'émission « D » de chaque terminal « x » du groupe est identique, et commence à l'instant tx (tx indique donc l'instant de début d'émission pour le terminal x),
- le rang « Rx » de chaque terminal « x » indique sa position dans le groupe,
- le nombre « n » de terminaux possibles dans le groupe donne le temps de cycle total « C » de sorte que D * n = C.

Le tableau ci-dessous donne un exemple, pour six terminaux, de la distribution temporelle des temps d'émission :

| 1 | | | | | |
|---|---|---|---|---|---|
| | 2 | | | | |
| | | 3 | | | |
| | | | 4 | | |
| | | | | 5 | |
| | | | | | 6 |

Pour exposer le multiplexage temporel, on prend, à titre d'exemple, la synchronisation du terminal T4 sur le reste du groupe, dans l'hypothèse où seuls les terminaux T1, T3 et T5 sont à portée de signal du terminal T4. Le terminal T4 est en mode de synchronisation, en phase d'écoute.

| D1 | | | | |
| | | D3 | | |
| | | | D5 | |
| | D4 ? | | | |

Le début d'émission prévu pour le terminal T4 est « t4p », qui n'est pas forcément synchronisé au reste du groupe. Dans le premier cas, le terminal T4 reçoit le signal émis par le terminal T5, à l'instant t5, et l'identifie comme tel. Dans ce cas, le terminal T4 calcule son propre prochain instant de début d'émission.

La différence des rangs entre les deux terminaux vaut (R5 - R4) = 1. Le nouvel instant t4 d'émission du terminal T4, est donné par la formule :

$$t4 = t5 + C - (R5 - R4){*}D = t5 + C - D.$$

Dans le deuxième cas, le terminal T4 capte, d'abord, le signal émis par le terminal T3. Le terminal T4 calcule alors son propre prochain instant t4 de début d'émission. La différence de rangs entre les deux terminaux vaut (R3 - R4) = - 1. Le nouvel instant t4 d'émission du terminal T4, est donné par la formule :

$$t4 = t3 + C - (R3 - R4) {*}D = t3 + C + D.$$

Dans le troisième cas, le terminal T4 capte, d'abord, le signal émis par le terminal T1. Le terminal T4 calcule alors son propre prochain instant t4 de début d'émission. La différence de rangs entre les deux terminaux vaut (R1 - R4) = - 3. Le nouvel instant t4 d'émission du terminal T4, est donné par la formule :

$$t4 = t1 + C - (R1 - R4) {*}D = t1 + C + 3 D.$$

Les inventeurs ont aussi déterminé l'existence d'un problème général dans les systèmes de conférence à plusieurs personnes. Dans ce type de système, il y a généralement plus de temps où les utilisateurs ne parlent pas et où les circuits de communication transmettent donc un signal représentatif du silence. Par exemple, en conférence à trois, même si les utilisateurs sont en conversation permanente, seul l'un des trois parle à un instant donné. Ainsi, les circuits de communication n'émettent des signaux représentatifs de voix qu'un tiers du temps, en moyenne, pour chaque interlocuteur. L'utilisation normale moyenne en conférence à trois comporte donc au moins l'émission de deux tiers de signaux représentatifs de silence.

Corrélativement, le mode conférence à plusieurs en full duplex implique des transmissions permanentes de chaque terminal faisant partie du réseau pour maintenir la synchronisation entre les différents terminaux.

La transmission en radio fréquence est soumise à un taux d'utilisation, nommé « Duty Cycle ». Selon les gammes de fréquence radio utilisées, le taux d'occupation autorisé de la bande par chaque terminal peut varier de 0,1% à 100% en moyenne sur une heure d'utilisation. Par exemple, dans la bande 869,400 Mhz à 869,650 Mhz, ce taux d'occupation est au maximum de 10%.

Cette contrainte oblige à limiter les temps de transmission radio, ce qui se traduit par :

- la nécessité de diminuer la quantité d'informations à transmettre, d'où une baisse de la qualité de son dans un contexte audio,
  ou
- la nécessité d'augmenter la vitesse de transmission de ces informations, d'où une baisse de la portée radio et/ou baisse du nombre de canaux possibles pour cause d'élargissement de ces canaux.

Par ailleurs, la transmission radio est consommatrice d'énergie et l'autonomie des batteries des appareils radio est fortement affectée par les durées de transmission (voir les téléphones en veille / en communication). Les systèmes full-duplex ont donc des autonomies plus réduites, à caractéristiques techniques équivalentes, que les systèmes Half-duplex.

Comme illustré en figure 4, dans des modes de réalisation du procédé objet de la présente invention, on détermine, au cours d'une étape 405, si un son doit être représenté par un signal émis par le circuit digital de communication 255. La détection d'un son à émettre se fait sur le niveau de son (énergie) dans une bande proche de la voix (de 300 à 3000Hz par exemple) et non pas sur le type de son. L'intérêt est de permettre aux intervenants de déceler à distance ce qu'entend l'un d'entre eux sans masquer d'événement.

Lorsqu'un son a été détecté, au cours d'une étape 410, on constitue une trame représentative du son capté, de manière classique et, au cours d'une étape 415, on émet la trame ainsi constituée dans le prochain cycle de communication.

Lorsqu'un terminal 205 ne doit pas transmettre de son car aucun son n'est détecté au cours de l'étape 405, au lieu d'envoyer des données de « son » contenant du « silence » (qui prennent autant d'octets à transmettre que pour transmettre un son normal), on constitue, au cours d'une étape 420, des trames de données beaucoup plus courtes signifiant simplement : « Silence ». Les informations envoyées par radio, au cours d'une étape 425 sont donc nettement réduites, et en conséquence les temps de transmission beaucoup plus courts, d'où une occupation beaucoup plus faible de la bande radio et une augmentation de l'autonomie.

Préférentiellement, au cours de l'étape 425, au lieu d'envoyer les trames « Silence » à chaque cycle du découpage temporel (comme ce qui est fait lorsqu'on transmet du « son »), on n'envoie cette trame qu'une fois sur n. Par exemple n = 10. Ainsi, lors des phases de silence d'un utilisateur, on émet les données n fois moins souvent, d'où une occupation encore beaucoup plus faible de la bande de fréquences.

Durant les phases de silence, on émet donc non seulement moins d'informations, mais aussi moins souvent.

Cette solution permet également de profiter des moments de silence pour transférer des données en provenance des capteurs intégrés au terminal 205.

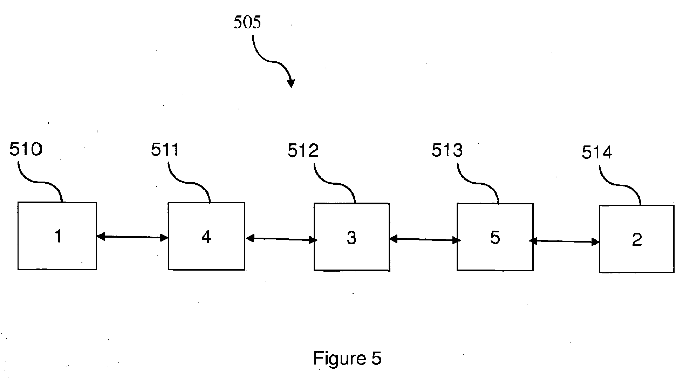

Enfin, les inventeurs ont également constaté que certains cas extrêmes pouvaient poser des problèmes de synchronisation. Sur la figure 5 sont représentés cinq terminaux 510 à 514 constituant un réseau 505. Les flèches entre les terminaux signifient qu'ils sont en portée radio entre eux et qu'ils peuvent donc communiquer entre eux et que seuls les terminaux reliés entre eux par ces flèches sont en portée radio entre eux. Dans l'état de l'art actuel basé sur la technologie Maître/Esclave, soit un Maître est défini manuellement et seuls les terminaux qui sont à portée radio avec lui peuvent parler, les autres étant déconnectés dudit réseau (dans notre exemple, si le terminal 510 est le Maître, seul le terminal 511 fait partie du réseau, les autres n'étant pas à portée radio du 510). L'autre possibilité est la création dynamique de Maître, ce qui crée donc deux sous-réseaux de deux ou trois terminaux (par exemple, le terminal 511 est le Maître des terminaux 510 et 512, et le terminal 514 est le Maître du terminal 513). La cohabitation de deux sous-réseaux provoque des problèmes au niveau des terminaux 512 et 513 qui reçoivent des trames des deux sous-réseaux avec des cycles temporels qui peuvent se chevaucher et amener des collisions de trames radio. Cette solution ne peut donc garantir un bon fonctionnement des communications pour ces deux terminaux, et notamment, les terminaux 512 et 513, bien qu'en portée radio entre eux, ne peuvent pas communiquer entre eux car ils ne sont pas synchronisés sur la même base de temps puisqu'ils n'ont pas le même Maître.

La méthode de synchronisation proposée dans la présente invention permet d'éviter les problèmes de cette configuration en mettant en oeuvre un mécanisme de priorité pour les synchronisations. En effet, dans cet exemple, le terminal 510 pourrait se synchroniser sur le terminal 511 et réciproquement, et les terminaux 512, 513 et 514 pourraient se synchroniser entre eux. A terme, il y aurait donc potentiellement deux sous-réseaux constitués des terminaux 510 et 511, d'une part, et des terminaux 512, 513 et 514, d'autre part. Chaque sous-réseau aurait une base de temps indépendante, qui pourrait dériver par rapport à celle de l'autre sous-réseau, et finir par provoquer un chevauchement des cycles périodiques et donc des collisions lors des transmissions de trames.

La mise en oeuvre du principe de priorité décrit dans la présente invention permet d'éviter ce problème en incitant les terminaux à choisir un terminal plutôt qu'un autre pour se re-synchroniser quand ils ont le choix. Pour garantir l'impossibilité de créer deux sous-réseaux, la profondeur du chaînage des numéros d'ordre des terminaux synchronisés entre eux doit être égale au nombre de terminaux du groupe moins trois, soit 5-3=2 dans notre exemple. Ainsi, dans cette configuration, les trames envoyées contiennent respectivement :

- pour le terminal 510 : « 1 - 4 , 1 » (signifiant : j'ai le numéro d'ordre « 1 » et je suis synchronisé sur T4 qui est lui-même synchronisé sur T1)
- pour le terminal 511 : « 4 - 1 , 4 » (signifiant : j'ai le numéro d'ordre « 4 » et je suis synchronisé sur T1 qui est lui-même synchronisé sur T4)
- pour le terminal 512 : « 3-4 , 1 » (signifiant : j'ai le numéro d'ordre « 3 » et je suis synchronisé sur T4 qui est lui-même synchronisé sur T1)
- pour le terminal 513 : « 5 - 3 , 4 » (signifiant : j'ai le numéro d'ordre « 5 » et je suis synchronisé sur T3 qui est lui-même synchronisé sur T4)
- pour le terminal 514 : « 2 - 5 , 3 » (signifiant : j'ai le numéro d'ordre « 2 » et je suis synchronisé sur T5 qui est lui-même synchronisé sur T3)

Ainsi, quand le terminal 512 doit se re-synchroniser, il a potentiellement le choix entre le terminal 511 et le terminal 513 qui sont tous deux à portée radio. Sans mécanisme de priorité, il pourrait choisir l'un ou l'autre avec le risque de créer un nouveau sous-réseau s'il choisissait le terminal 513 (il y aurait alors un sous-groupe avec les terminaux 510 et 511 et un second sous-groupe avec les terminaux 512, 513 et 514). Mais en appliquant l'algorithme consistant à prendre le plus petit numéro d'ordre ou le terminal le plus proche du terminal ayant ce plus petit numéro, le terminal 512 choisit préférentiellement le terminal 511 qui contient le numéro « 1 » dans sa trame « 4 - 1 , 4 » alors que le terminal 513 a comme plus petit numéro, le « 3 » dans sa trame « 5 - 3, 4 ».

De même, le terminal 513 a le choix entre le terminal 512 et le terminal 514 mais il choisit le terminal 512 qui contient le « 1 » dans sa trame « 3 - 4, 1 » alors que le terminal 514 a « 2 » comme plus petit numéro dans sa trame « 2 - 5, 3 ». Enfin, le terminal 511 a le choix entre le terminal 510 qui a pour trame « 1 - 4, 1 » et le terminal 512 qui a pour trame « 3 - 4 , 1 ». Le plus petit numéro est le « 1 » et il est présent dans les deux trames, l'algorithme détermine donc que c'est le terminal 510 qui est prioritaire car c'est le terminal pour lequel ce numéro a le rang le plus élevé dans sa trame (rang « 1 » pour le terminal 510 et rang « 3 » pour le terminal 512). Ce mécanisme de priorité permet à chacun des terminaux de se synchroniser préférentiellement avec le terminal actif ayant le numéro d'ordre le plus petit dans le groupe, ou avec le terminal le plus proche (en terme de noeuds réseaux) du terminal actif ayant le numéro d'ordre le plus petit et ainsi d'interdire la création de plusieurs sous-réseaux.

**Revendications**

1. Terminal de communication (110 à 113, 510 à 514) qui comporte :

   - un circuit digital de communication (255) utilisant un multiplexage temporel sur un seul canal radio, sélectionnable dans une bande de fréquences donnée, ledit terminal mettant en oeuvre une communication sans fil en mode «conférence» et «mains-libres» sur un réseau autonome entre au moins deux porteurs de dispositifs homologues,

   **caractérisé en ce que** :

   - ce circuit digital de communication (255) est configuré pour que chaque trame qu'il envoie comporte à la fois le numéro d'ordre dudit terminal dans le groupe, et, dans le cas où le groupe comporte plus de trois terminaux, un chainage des numéros d'ordre des terminaux synchronisés entre eux et
   - le terminal comporte un moyen (250) de synchronisation automatique sur le signal de n'importe quel autre terminal de son groupe de terminaux pour synchroniser son horloge interne, et donc le cycle périodique, sur une base de temps commune à tous les terminaux du groupe, cette synchronisation étant effectuée à partir du numéro d'ordre du terminal émetteur présent dans la trame, ledit numéro permettant au moyen de synchronisation de calculer son propre instant d'émission dans le cycle périodique du multiplexage temporel,
   - ce moyen (250) de synchronisation automatique procède à des re-synchronisations par recalage de son horloge interne sur celle d'un terminal de son groupe dont il a reçu une trame, cette resynchronisation mettant en oeuvre, dans le cas où le groupe est composé de plus de trois terminaux, le numéro d'ordre du terminal émetteur, ainsi que le chainage ordonné des numéros d'ordre des terminaux synchronisés entre eux.

2. Terminal selon la revendication 1, dans lequel le circuit digital de communication (255) est configuré pour que chaque trame qu'il envoie comporte un identifiant du groupe auquel ledit terminal appartient.

3. Terminal selon l'une des revendications 1 ou 2, dans lequel le circuit digital de communication (255) est configuré pour que le chainage ordonné des numéros d'ordre des terminaux synchronisés entre eux, qu'il envoie dans chaque trame, soit ordonné à plusieurs niveaux.

4. Terminal selon l'une des revendications 1 à 3, dans lequel le moyen (250) de synchronisation automatique resynchronise son horloge interne sur celle d'un terminal de son groupe dont il a reçu une trame de données ou de synchronisation, en mettant en oeuvre une priorité basée sur la suite de nombres présente dans les trames reçues des autres terminaux comportant le numéro d'ordre du terminal émetteur.

5. Terminal selon la revendication 4, dans lequel le moyen (250) de synchronisation resynchronise son horloge interne sur celle d'un terminal actif de son groupe en mettant en oeuvre une priorité consistant à se synchroniser sur le terminal actif du groupe ayant le niveau de priorité le plus important dans le groupe.

**6.** Terminal selon la revendication 5, dans lequel le moyen (250) de synchronisation automatique procède, à défaut de réception de trames en provenance du terminal actif ayant le niveau de priorité le plus important dans le groupe, à une synchronisation sur le terminal actif le plus proche en nombre de noeuds dudit terminal actif ayant ce niveau de priorité le plus important

**7.** Terminal (110 à 113, 510 à 514) selon l'une des revendications 1 à 6, dans lequel le circuit digital de communication (255), est configuré pour émettre et recevoir, par application de la technique du multiplexage temporel, des données numériques sur un canal unique sélectionné, selon un cycle périodique commun à tous les terminaux du groupe, selon un numéro d'ordre unique dans le groupe de terminaux, les instants d'émission du circuit digital dépendant du numéro d'ordre unique dans le groupe, les instants de réception ayant lieu pendant le reste du cycle périodique, ledit cycle périodique étant basé sur la base de temps commune à tous les terminaux du groupe définie lors de la synchronisation des terminaux.

**8.** Terminal (110 à 113, 510 à 514) selon l'une des revendications 1 à 7, dans lequel le circuit digital de communication (255) est configuré pour, lors de la mise en service du terminal, écouter le réseau pour détecter l'émission éventuelle d'une trame de synchronisation ou de données émanant d'un terminal d'un autre groupe et pour changer automatiquement de canal vers un canal libre pour initier une communication avec les terminaux de son propre groupe.

**9.** Terminal (110 à 113, 510 à 514) selon l'une des revendications 1 à 8, dans lequel le circuit digital de communication (255) est configuré, lors de la mise en service du terminal, pour écouter le réseau pour détecter l'émission éventuelle d'une trame de synchronisation ou de données émanant d'un autre terminal du même groupe.

**10.** Terminal (110 à 113, 510 à 514) selon l'une des revendications 1 à 9, dans lequel le moyen (250) de synchronisation est configuré pour se synchroniser sur le premier signal de synchronisation ou de données émanant d'un autre terminal du même groupe, et en cas de non réception d'un signal, pour émettre, à intervalles de temps dépendants de son numéro d'ordre, son propre signal de synchronisation à l'adresse des autres terminaux du groupe pour initier une communication.

**11.** Terminal (110 à 113, 510 à 514) selon l'une des revendications 1 à 10, dans lequel le circuit digital de communication (255) est configuré pour détecter l'absence de signaux émis par un terminal homologue de son groupe et, en cas de détection de cette absence, pour passer en mode d'initialisation d'une communication qui consiste à alterner :

- les phases d'écoute du réseau pour détecter l'émission éventuelle d'un signal de synchronisation ou de données émanant d'un autre terminal du même groupe, et
- les phases de tentatives d'initialisation d'une communication par émission de son propre signal de synchronisation à l'adresse des autres terminaux du groupe pour initier une communication.

**12.** Terminal (110 à 113, 510 à 514) selon l'une des revendications 1 à 11, dans lequel le circuit digital de communication (255) continue d'envoyer ses trames de données ou de synchronisation durant le temps alloué pour la re-synchronisation.

**13.** Terminal (110 à 113, 510 à 514) selon l'une des revendications 1 à 12, qui comporte, en outre, au moins un détecteur et/ou des fonctions internes permettant d'assurer des déclenchements d'alertes ou l'envoi de messages aux autres terminaux du groupe par le circuit digital de communication.

**14.** Terminal (110 à 113, 510 à 514) selon l'une des revendications 1 à 13, qui comporte, en outre, un moyen (250, 405) de déterminer si un son doit, ou pas, être représenté par un signal émis par le circuit digital de communication, le circuit digital de communication étant configuré pour, en cas d'absence de son à représenter, constituer et émettre une trame d'une taille inférieure à une trame représentant du son et signifiant cette absence, dans lequel le circuit digital de communication (255) est configuré pour, en cas d'absence de son à représenter, n'émettre qu'une seule trame signifiant cette absence pour une pluralité de cycles de communication.

**15.** Casque audio (205) qui comporte un terminal (110 à 113, 510 à 514) selon l'une des revendications 1 à 14.

**Patentansprüche**

**1.** Kommunikationsendvorrichtung (110 bis 113, 510 bis 514), die Folgendes aufweist:

- eine digitale Kommunikationsschaltung (255), die ein Zeitmultiplexverfahren auf einem einzigen Radiokanal, der aus einem gegebenen Frequenzbereich ausgewählt werden kann, verwendet, wobei die Endvorrichtung eine drahtlose Kommunikation im "Konferenz"- und "Freisprech"-Modus in einem autonomen Netz zwischen mindestens zwei Trägern gleichartiger Vorrichtungen ausführt,

**dadurch gekennzeichnet, dass**:

- diese digitale Kommunikationsschaltung (255) so konfiguriert ist, dass jeder Satz, den sie schickt, gleichzeitig die laufende Nummer der Endvorrichtung in der Gruppe aufweist und falls die Gruppe mehr als drei Endvorrichtungen aufweist, eine Verknüpfung der laufenden Nummern der untereinander synchronisierten Endvorrichtungen aufweist und
- die Endvorrichtung ein Mittel (250) zur automatischen Synchronisation mit dem Signal von irgendeiner anderen Endvorrichtung seiner Gruppe von Endvorrichtungen aufweist, um ihren internen Zeitgeber und somit den periodischen Zyklus auf einer Zeitbasis zu synchronisieren, die für alle Endvorrichtungen der Gruppe gleich ist, wobei diese Synchronisation ausgehend von der laufenden Nummer der Sendeendvorrichtung, die in dem Satz vorhanden ist, durchgeführt wird, wobei es die Nummer dem Mittel zur Synchronisation ermöglicht, seinen eigenen Sendezeitpunkt in dem periodischen Zyklus des Zeitmultiplexverfahrens zu berechnen,
- dieses Mittel (250) zur automatischen Synchronisation Resynchronisationen durch Retiming seines internen Zeitgebers auf den einer Endvorrichtung seiner Gruppe, von der er einen Satz erhalten hat, vornimmt, wobei diese Synchronisation, falls die Gruppe aus mehr als drei Endvorrichtungen besteht, die laufende Nummer der Sendeendvorrichtung sowie die geordnete Verknüpfung der laufenden Nummern der untereinander synchronisierten Endvorrichtung ausführt.

2. Endvorrichtung nach Anspruch 1, wobei die digitale Kommunikationsschaltung (255) so konfiguriert ist, dass jeder Satz, den sie schickt, einen Identifikator der Gruppe aufweist, zu der die Endvorrichtung gehört.

3. Endvorrichtung nach einem der Ansprüche 1 oder 2, wobei die digitale Kommunikationsschaltung (255) so konfiguriert ist, dass die geordnete Verknüpfung der laufenden Nummern der untereinander synchronisierten Endvorrichtungen, die sie in jedem Satz sendet, auf mehreren Stufen geordnet ist.

4. Endvorrichtung nach einem der Ansprüche 1 bis 3, wobei das Mittel (250) zur automatischen Synchronisation seinen internen Zeitgeber mit dem einer der Endvorrichtungen seiner Gruppe resynchronisiert, von der es einen Daten- oder Synchronisationssatz erhalten hat, indem es eine Priorität ausführt, die auf der Abfolge von Zahlen basiert, die in den Sätzen vorhanden sind, die von den anderen Endvorrichtungen erhalten wurden, die die laufende Nummer der Sendeendvorrichtungen aufweisen.

5. Endvorrichtung nach Anspruch 4, wobei das Mittel (250) zur Synchronisation seinen internen Zeitgeber mit dem einer aktiven Endvorrichtung seiner Gruppe resynchronisiert, indem es eine Priorität ausführt, die darin besteht, sich mit der aktiven Endvorrichtung der Gruppe zu synchronisieren, die die höchste Prioritätsstufe in der Gruppe hat.

6. Endvorrichtung nach Anspruch 5, wobei das Mittel (250) zur automatischen Synchronisation bei fehlendem Empfang von Sätzen aus der aktiven Endvorrichtung, die die höchste Prioritätsstufe in der Gruppe hat, eine Synchronisation mit der aktiven Endvorrichtung vornimmt, die der aktiven Endvorrichtung, die diese höchste Prioritätsstufe hat, hinsichtlich der Anzahl von Knoten am nächsten ist.

7. Endvorrichtung (110 bis 113, 510 bis 514) nach einem der Ansprüche 1 bis 6, wobei die digitale Kommunikationsschaltung (255) so konfiguriert ist, dass sie durch Anwendung der Zeitmultiplextechnik digitale Daten auf einem einzigen ausgewählten Kanal gemäß einem periodischen Zyklus, der für alle Endvorrichtungen der Gruppe gleich ist, gemäß einer einzigen laufenden Nummer in der Gruppe von Endvorrichtungen sendet und empfängt, wobei die Sendezeitpunkte der digitalen Schaltung von der einmaligen laufenden Nummer in der Gruppe abhängen, wobei die Empfangszeitpunkte während des Rests des periodischen Zyklus stattfinden, wobei der periodische Zyklus auf der Zeitbasis basiert, die für alle Endvorrichtungen der Gruppe gleich ist, die während der Synchronisation der Endvorrichtungen definiert wurde.

8. Endvorrichtung (110 bis 113, 510 bis 514) nach einem der Ansprüche 1 bis 7, wobei die digitale Kommunikationsschaltung (255) konfiguriert ist, um, während der Inbetriebnahme der Endvorrichtung, das Netz abzuhören, um das mögliche Senden eines Synchronisations- oder Datensatzes zu erfassen, der von einer anderen Endvorrichtung einer anderen Gruppe stammt und automatisch von dem Kanal in einen freien Kanal zu wechseln, um eine Kommunikation mit den Endvorrichtungen seiner eigenen Gruppe zu starten.

9. Endvorrichtung (110 bis 113, 510 bis 514) nach einem der Ansprüche 1 bis 8, wobei die digitale Kommunikationsschaltung (255) konfiguriert wird, um, während der Inbetriebnahme der Endvorrichtung, das Netz abzuhören, um das mögliche Senden eines Synchronisations- oder Datensatzes zu erfassen, der von einer anderen Endvorrichtung der gleichen Gruppe stammt.

10. Endvorrichtung (110 bis 113, 510 bis 514) nach einem der Ansprüche 1 bis 9, wobei das Mittel (250) zur Synchronisation konfiguriert ist, um sich mit dem ersten Synchronisations- oder Datensignal, das von einer anderen Endvorrichtung der gleichen Gruppe stammt, zu synchronisieren, und falls kein Signal empfangen wird, in Zeitintervallen, die von ihrer laufenden Nummer abhängig sind, ihr eigenes Synchronisationssignal an die Adresse der anderen Endvorrichtungen der Gruppe zu senden, um eine Kommunikation zu starten.

11. Endvorrichtung (110 bis 113, 510 bis 514) nach einem der Ansprüche 1 bis 10, wobei die digitale Kommunikationsschaltung (255) konfiguriert ist, um die Abwesenheit von Signalen, die von einer gleichartigen Endvorrichtung ihrer Gruppe gesendet werden, zu erfassen, und, bei Erfassung dieser Abwesenheit, in den Modus zum Starten einer Kommunikation umzuschalten, der darin besteht:

- die Phasen des Abhörens des Netzes, um das mögliche Senden eines Synchronisations- oder Datensignals zu erfassen, das von einer anderen Endvorrichtung der gleichen Gruppe stammt, und
- die Phasen der Versuche zum Starten einer Kommunikation durch Senden ihres eigenen Synchronisationssignals an die Adresse der anderen Endvorrichtungen der Gruppe, um eine Kommunikation zu starten, abzuwechsel n.

12. Endvorrichtung (110 bis 113, 510 bis 514) nach einem der Ansprüche 1 bis 11, wobei die digitale Kommunikationsschaltung (255) während der Zeit, die für die Resynchronisation zugewiesen wurde, weiterhin ihre Daten- oder Synchronisationssätze schickt.

13. Endvorrichtung (110 bis 113, 510 bis 514) nach einem der Ansprüche 1 bis 12, die ferner mindestens einen Detektor und/oder interne Funktionen aufweist, die es ermöglichen, das Auslösen von Warnungen oder das Schicken von Mitteilungen an andere Endvorrichtungen der Gruppe über die digitale Kommunikationsschaltung zu gewährleisten.

14. Endvorrichtung (110 ä 113, 510 ä 514) nach einem der Ansprüche 1 bis 13, die ferner ein Mittel (250, 405) zum Bestimmen, ob ein Ton von einem Signal, das mit der digitalen Kommunikationsschaltung gesendet wird, dargestellt oder nicht dargestellt werden soll, aufweist, wobei die digitale Kommunikationsschaltung konfiguriert ist, um bei Abwesenheit eines darzustellenden Tons, einen Satz mit einer Größe zu erstellen und zu senden, der kleiner ist als ein Satz, der Ton darstellt und diese Abwesenheit bedeutet, wobei die digitale Kommunikationsschaltung (255) konfiguriert ist, um bei Abwesenheit eines darzustellenden Tons nur einen einzigen Satz, der diese Abwesenheit bedeutet, für eine Vielzahl von Kommunikationszyklen zu senden.

15. Kopfhörer (205), der eine Endvorrichtung (110 bis 113, 510 bis 514) nach einem der Ansprüche 1 bis 14 aufweist.

## Claims

1. Communication terminal (110 to 113, 510 to 514), that comprises:

   - a digital communication circuit (255) using time multiplexing on a single radio channel, selectable in a given frequency band, said system implementing a wireless communication in "conference" and "hands-free" mode on an autonomous network between at least two wearers of similar terminals,

   **characterized in that**:

   - this digital communication circuit (255) is configured so that each frame it sends contains both the order number of said terminal in the group, and, in case the group comprises more than three terminals, a chaining data of the order numbers of the terminals synchronized with each other and
   - the terminal comprises an automatic means (250) for synchronizing to the signal of any of the other terminals in the group of terminals, to synchronize its internal time reference, thus the periodic time cycle, on a time reference common for all terminals of the group, this synchronization being based on the order number of the transmitting terminal present in the frame, the said order number allowing to calculate its own transmission time slot in the periodic cycle time of the Time Division Multiplex,
- this means (250) for automatic synchronization conducts re-synchronizations by resetting its internal clock to that of a terminal of its group from which it has received a frame, this resynchronization implementing, when the group is composed of more than three terminals, the order number of the transmitting terminal and the ordered chaining data of order numbers of the terminals synchronized with each other.

2. Terminal according to claim 1, wherein the digital communication circuit (255) is configured so that each frame it sends comprises an identifier of the group to which said terminal belongs.

3. Terminal according to one of claims 1 or 2, wherein the digital communication circuit (255) is configured so that the ordered chaining data of order numbers of terminals mutually synchronized, which is sent in each frame, is ordered on several levels.

4. Terminal according to one of claims 1 to 3, wherein the means (250) for automatic synchronization resynchronizes its internal clock with that of a terminal of its group from which it has received a synchronization or data frame, implementing a priority based on the sequence of numbers in the frames received from the other terminals having the order number of the transmitting terminal.

5. Terminal according to claim 4, wherein the means (250) synchronization resynchronizes its internal clock to that of an active terminal in its group by implementing a priority of synchronization on the active terminal of the group having the most important priority level in the group.

6. Terminal according to claim 5, wherein the means (250) for automatic synchronization proceeds, failing to receive frames from the active terminal with the most important priority level in the group, synchronization on the nearest active terminal, in number of nodes, of said active terminal having the most important priority level in the group.

7. Terminal (110 to 113, 510 to 514) according to one of claims 1 to 6, wherein the digital communication circuit (255) is configured for transmitting and receiving, by applying the technique of Time Division Multiplexing, the digital data on a selected unique radio channel, according to a periodic cycle time common to all terminals of the group, based on an unique order number in the group of terminals, the transmission times of the digital circuitry depending of the unique order number in the group, the reception times taking place during the rest of the periodic cycle time, said periodic cycle time being based on the time reference common to all terminals in the group set when synchronizing the terminals.

8. Terminal (110 to 113, 510 to 514) according to one of claims 1 to 7, wherein the digital communication circuit (255) is configured to, when the terminal is starting, listen to the network for detecting the possible transmission of a synchronization or data frame from a terminal of another group and to automatically change the channel to a free channel to initiate communication with terminals of its own group.

9. Terminal (110 to 113, 510 to 514) according to one of claims 1 to 8, wherein the digital communication circuit (255) is configured to, when the terminal is starting, listen to the network for detecting the possible transmission of a synchronization or data frame emitted by another terminal of the same group.

10. Terminal (110 to 113, 510 to 514) according to one of claims 1 to 9, wherein the means (250) for synchronization is configured to synchronize with the first synchronization or data signal emitted by another terminal of the same group, and in case of non-receipt of such a signal, to emit at intervals of time dependent of its order number, its own synchronization signal to the other terminals of the group to initiate communication.

11. Terminal (110 to 113, 510 to 514) according to one of claims 1 to 10, wherein the digital communication circuit (255) is configured to detect the absence of signals transmitted by a counterpart terminal of its group and in case of detection of this absence, to enter into a communication mode consisting of alternating:

- the listen of the network phases for detecting a possible emission of a synchronization or data signal emitted by another terminal of the group, and
- the communication initialization attempts phases by transmission of its own synchronization signal addressed to the other terminals of the group to initiate a communication.

**12.** Terminal (110 to 113, 510 to 514) according to one of claims 1 to 11, wherein the digital communication circuit (255) continues to send its data and synchronization frames during the time allocated for the re-synchronization.

**13.** Terminal (110 to 113, 510 to 514) according to one of claims 1 to 12, that further comprises at least one sensor and / or internal functions to ensure triggering of alerts or sending messages to other terminals of the group by the digital communication circuit.

**14.** Terminal (110 to 113, 510 to 514) according to one of claims 1 to 13, that further comprises means (250, 405) to determine whether a sound is, or not, to be represented by a signal transmitted by the digital communication circuit, the digital communication circuit being configured to, in case of no sound to represent, to transmit a frame having a smaller size than a frame representative of a sound and meaning this absence, wherein the digital communication circuit (255) is configured to, in case of no sound to represent, transmit only one frame meaning this absence for a plurality of communication cycles.

**15.** Audio Headset (205) comprising a terminal (110 to 113, 510 to 514) according to one of claims 1 to 14.

Figure 1

Figure 2

| Affectation d'au moins un no. d'ordre | 305 |
| Ecoute du réseau | 310 |
| Synchronisation sur un signal reçu | 315 |
| Emission d'un signal de synchronisation | 320 |
| Emission de trames avec no. d'ordre | 325 |
| Re-synchronisation sur un signal reçu | 330 |

Figure 3

Détection de son à émettre ⌐405

Oui          Non

410⌐ Constitution de trame de sons          Constitution d'une trame silence ⌐420

415⌐ Emission de trames de sons          Emission de la trame silence ⌐425

Figure 4

505

510    511    512    513    514

| 1 | 4 | 3 | 5 | 2 |

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2947124 A
- GB 2362292 A
- EP 1843326 A
- EP 2244526 A
- EP 09784329 A